# EUROPEAN PATENT APPLICATION

(11) **EP 1 178 548 A1**
(43) Date of publication of application: **06.02.2002**
(21) Application number: 01850134.6
(22) Date of filing: 02.08.2001
(51) Int. Cl.: H01M 2/10

(54) **Battery box for a vehicle comprising replaceable modules for electrical components**

(30) Priority: 02.08.2000 SE 0002810
(71) Applicant: Volvo Lastvagnar AB, 405 08 Göteborg (SE)
(72) Inventor: Den Hartog, James, 441 65 Alinsas (SE); Boidache, Carmen, 415 02 Göteborg (SE)
(74) Representative: Andersson, Per Rune

(57) **Abstract**

The invention relates to a battery box for a vehicle, which battery box (201, 301, 401, 501, 601, 701, 801) is mounted to a frame (204, 304, 404, 504, 604, 704, 804) of the vehicle and includes a battery pack for supplying the vehicle with current. The battery box further includes a removably mounted module (230, 330, 430, 530, 630, 730, 830) for electrical components. The invention further relates to a method for mounting the battery box, and a system of replaceable modules.

## Description

### TECHNICAL FIELD

The invention relates to a battery box provided with a collective distribution box in the form of a module and a method for mounting such a module.

### BACKGROUND ART

Vehicles provided with frame-mounted battery boxes can currently display a large number of versions with respect to positioning of the boxes and other electrical equipment. The reason for this is that authorities and hauliers in different countries and continents have different requirements with respect to standards and technical specifications. Because there is currently no common standard vehicle manufacturers are having great difficulties in keeping track of a large number of different versions of their vehicles.

In some cases the hauliers will require larger fuel tanks, for the purpose of increasing the range of the vehicle, while others will require two smaller tanks, for the purpose of reducing the kerb weight of the vehicle at certification.

In addition there are a number of different demands with respect to size and positioning of pneumatic tanks, positioning of air compressors, positioning of silencers, design of streamlined covers, extra space for tools and spare wheels, etc. . Further versions will arise from the fact that there are vehicles with different wheelbases, which as a rule limits the available free space.

In other cases a haulier may need to convert the vehicle, for instance to add a bogie lifter or a hydraulic crane. Even if this often is done during the manufacture of the vehicle, it will entail moving and/or fitting existing equipment. This will in turn give rise to further versions.

Apart form the problems with mounting the battery box, all these versions is causing problems with mounting of various electrical equipment, such as battery master switches for ADR-systems and preheating relays. An ADR-system is a requirement for vehicles used for transporting dangerous goods. ADR is a set of rules for international/national road transport (**A**greement Européen Relatif au Transport Internatiional des Marchandises **D**angereuses par **R**oute). Usually many electrical components have been placed where space has been available, resulting in an unstructured design of the electrical system, extensive wiring and inaccessible equipment. Furthermore, certain electrical equipment has required special encapsulation due to its often exposed positioning.

The solution described hereinafter will alone replace a large number of different versions for design and positioning of battery boxes and auxiliary electrical equipment.

### DISCLOSURE OF INVENTION

The purpose of the invention is to solve the above problem by providing a modular battery box, in which a number of electrical functions have been gathered in a separate, preassembled module. This is achieved by means of a battery box according to claim 1, and a method for mounting such a module according to claim 15.

According to a preferred embodiment the invention comprises a battery box attached to the frame of the vehicle. The box encloses a battery pack for providing the vehicle with current and a removably mounted module for electrical components. According to this embodiment, the module can be mounted between the battery pack and the frame.

Further alternatives for mounting the module include the sides of the box, in front of or behind the battery pack as seen in the direction of travel of the vehicle, or in a cover positioned over both said units. In the latter case the module can be attached underneath or at the forward edge of the cover, or alternatively be integrated in the cover.

The module can be both exchangeable and/or expandable. With a system of exchangeable modules having different of varying functions, a hauling company can quickly add desired functions if the field of application needs to be changed, or if different types of additional equipment needs to be fitted to adapt the vehicle for a different use. This type of system will also make it possible for a manufacturer to simplify adaptations of vehicles for a particular market, in such cases where authorities or buyers have particular requirements on electrical equipment to be included in the vehicle. For the manufacturer this means that a vehicle or a range of vehicles can easily be modified using modules adapted for either 12 V or 24 V. This type of modular system requires that both vehicles and modules have compatible mechanical interfaces.

Modules which can be expanded is an alternative for vehicle owners who do not have the means to purchase several different modules, or who do not require to change the function or the version of the module very often. As the name suggests, a module that can be developed can be lifted out as a unit, be rebuilt to change and/or add functions, and then be re-installed in the vehicle.

For both exchangeable and expandable modules the above design makes it simpler to change functions, make repairs, recondition, re-build and/or upgrade to new versions of modules.

The different versions of modules described in the text below includes both exchangeable and expandable modules, although the text may appear to be more directed towards expandable modules. The is due to the fact that exchangeable modules may have the same design, but are delivered ready for mounting from the manufacturer.

The electrical components in the module constitutes a distribution box for supplying current, whereby the components are connected between the battery pack and a number of electrical consumers in the vehicle. Examples of such consumers are the preheating equipment for the engine, various lights and added equipment, such as bogie lifters and hydraulic cranes.

The module can be equipped as the need arises, depending on requirements from national authorities, hauliers and the range of use of the vehicle. In its simplest form the module contains a fuse box with main fuses. If the vehicle is to be used for dangerous cargo, such as corroding chemicals or flammable liquids, a so called ADR-classification is required. In a vehicle of this type, the module is provided with an electronic control unit (ADR-unit) and a power relay for interrupting the current from the battery pack, in addition to the fuse box. A current sensor arranged at a feeder cable from the battery pack can be connected to the ADR-unit, whereby the current can be interrupted automatically if it exceeds a predetermined value. It is also possible for the driver to interrupt the current from the cab and/or from one or more switches arranged on the outside of the cab. It is desirable to cut the power if, for instance a fire breaks out or a collision occurs. The power relay is connected directly to the positive terminal of the battery pack, in order to enable the supply of current to be interrupted if necessary.

The electronic control unit is preferably made up of a chassis enclosing printed circuit boards and other electronic control devices. According to a further embodiment the control unit can comprise at least one plug-in circuit board, in order to facilitate maintenance and modification/upgrading of the functions of the unit. The ADR-unit does not require any particular casing, as it is built into the battery box.

In countries with a colder climate, preheating of the engine is sometimes required. For such an embodiment, it is possible to mount the relay for engine preheating in the module.

In order to facilitate mounting of the battery box, the module can be pre-assembled to a major extent. The module preferably includes a chassis onto which the electrical components are pre-assembled by a manufacturing supplier. When the module is mounted in the vehicle, it is only necessary to connect cables to the plus and minus terminals of the battery pack, and to connect certain fuses. Outgoing cabling from the box can be pre-assembled and given correct lengths for wiring directly to the respective consumer. Simpler versions of the module, wherein one or more functions are missing, have a number of positions prepared for subsequent mounting of additional electrical components. In this way a haulier can rebuild or expand the module according to his needs. It is for example possible to mount a module with ADR-equipment in order to alter the range of use of the vehicle, or to add a further main fuse when additional equipment such as a bogie lifter or a crane is fitted. The cabling can also be given such a length that the entire battery box can be moved along the frame, if required during subsequent fitting of additional equipment. The introduction of a fuse box with all main fuses collected in a distribution box, in addition to the distribution box with its standard fuse box placed in the drivers cab, will increase safety and facilitate maintenance and repairs.

By providing the battery box with a cover, which when removed uncovers both the battery pack and the module, both maintenance and repairs is facilitated.

The module is preferably attached to the battery box by means of screws and the components will not require any further encapsulation in addition to their normal casings and covers. According to this embodiment the module is fully accessible when the battery pack has been removed. However, in particularly exposed environments, an improved protection for the components may be required. According to a further embodiment, all electrical components may be encapsulated in the module, whereby its walls are provided with a limited number of through connections for cabling, e.g. battery connections and cables for supplying current to consumers. In this case the module must be disconnected and lifted out of the battery box for service or replacement. Servicing and replacement can be further facilitated by providing each module with electrical and mechanical interfaces that allows for quick disconnection of electrical cables, and quick couplings for removing mechanical clamping devices. Such interfaces may be compatible with a similar vehicle or vehicles from the same manufacturer. In the long term it is also possible to design modules having interfaces compatible with vehicles from other manufacturers.

### BRIEF DESCRIPTION OF DRAWINGS

The different embodiments of the invention will now be described in detail, with reference to the attached drawings, wherein:
- Fig. 1: shows a known battery box provided with an ADR-unit;
- Fig. 2: shows a first positioning of a battery box on a vehicle;
- Fig. 3: shows a second positioning of a battery box on a vehicle;
- Fig. 4: shows a first embodiment of a module according to the invention;
- Fig. 5: shows a second embodiment of a module according to the invention;
- Fig. 6: shows a third embodiment of a module according to the invention;
- Fig. 7: shows a detailed view of the module of Fig. 5;
- Fig. 8: shows a schematic battery box according to the invention;
- Fig. 9: shows a schematic system of exchangeable modules.

### MODES FOR CARRYING OUT THE INVENTION

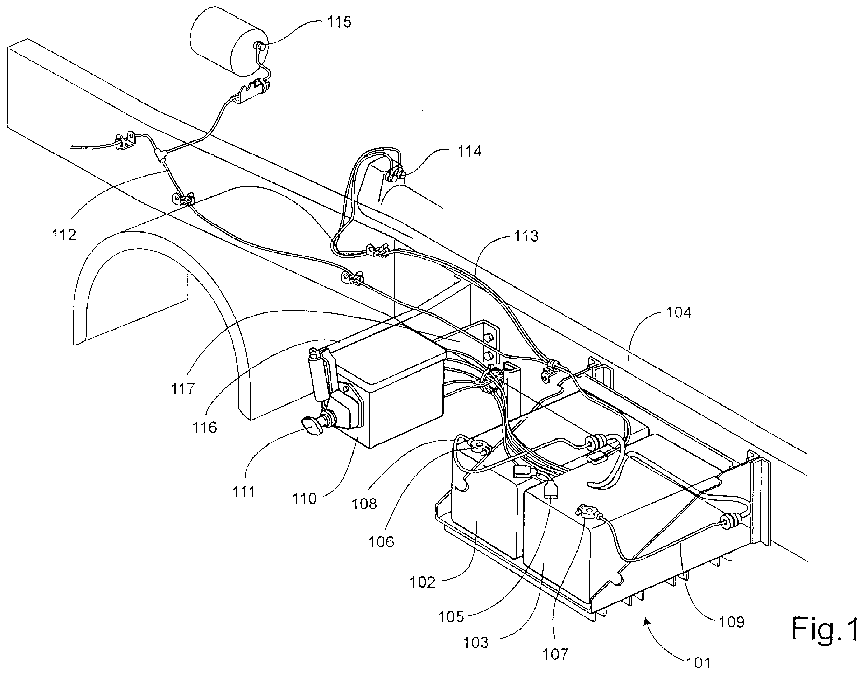

The state of the art with respect to mounting of battery boxes with peripheral electrical equipment is shown in Fig. 1. A battery box 101 with a battery pack including two batteries 102, 103 (shown schematically) is mounted onto a vehicle frame 104. The batteries 102, 103 are connected in series with a connection 105 and are further connected to an ADR-unit 110 by means of a pair of terminal clamps 106, 107 and a pair of cables 108, 109. The ADR-unit 110 is provided with a mechanical switch 111 for interrupting the current from the battery pack. From the ADR-unit, a number of cables 112, 113 have been connected to various current consumers 114, 115. As can be seen from the figure this positioning of the ADR-unit 110 requires a separate bracket 116 with a reinforcement 117 and an extended wiring between the unit and the battery box. The exposed position also requires additional encapsulation of the ADR-unit to protect it from humidity and external forces.

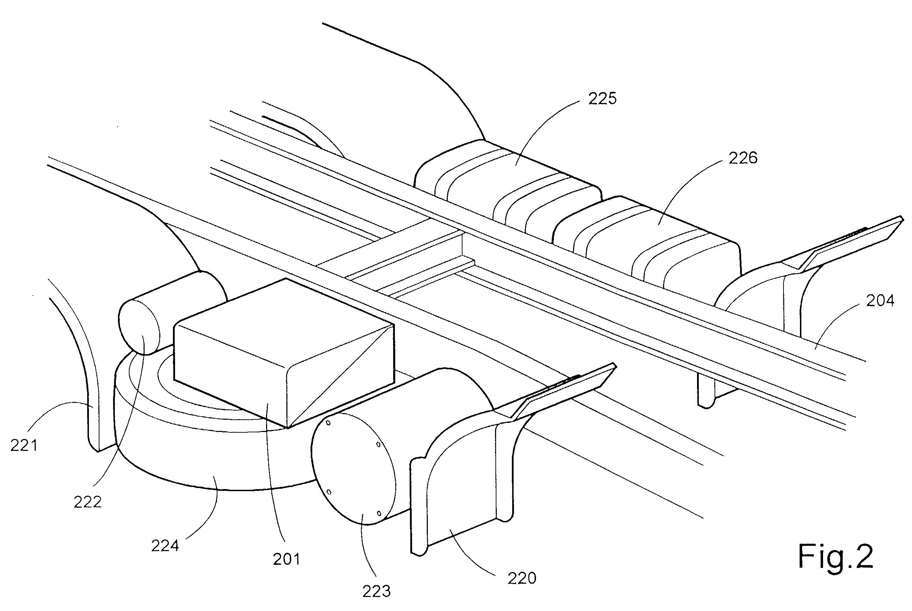

By building a battery box according to the invention, whereby a battery pack and a module containing a number of electrical components, which have previously been attached at various non-utilised locations along the frame, are integrated, the design of the vehicle is simplified. Figure 2 shows an example on how a battery box 201 can be attached to a vehicle frame 204 between a front and a rear wheel housing, 220 and 221 respectively. By collecting a number of electrical components in a module in the box 201, space for a pressure tank 222 has been created behind the battery box 201 without intruding on the space normally taken up by the vehicle silencer 223 or the spare wheel 224. On the opposite side of the vehicle electrical components have been moved to give more space for a pair of fuel tanks 225, 226.

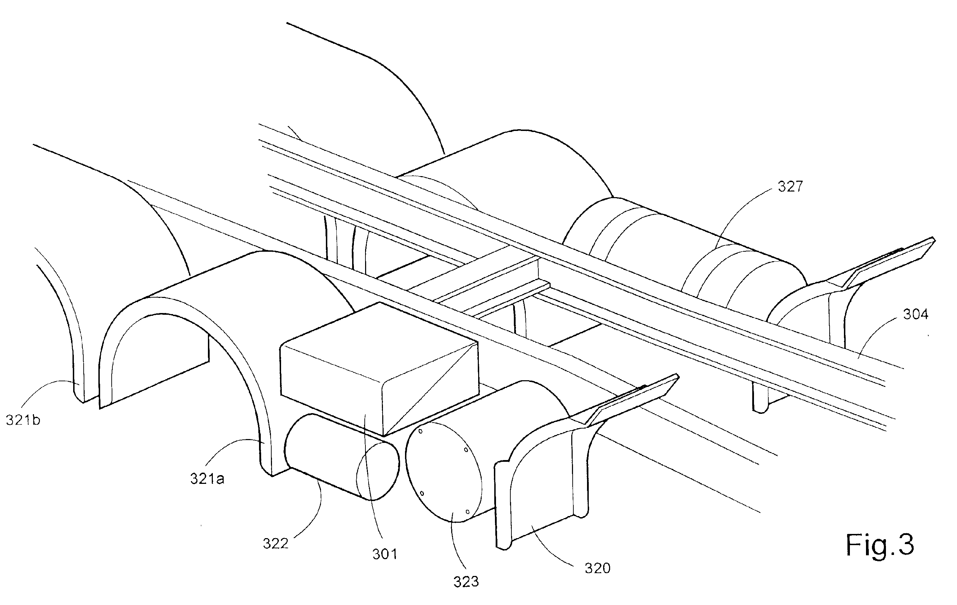

A further embodiment illustrating the problem of packing space is shown in Figure 3. In this case the battery box 301 has been attached to the vehicle frame 304 between a front and a pair of rear wheel housings, 320 and 321a/ 321 b respectively. By collecting a number of electrical components in the box 301, its position can be retained without intruding on the space taken up by the vehicle silencer 323. A tank for compressed air has been mounted under the battery box 301. On the opposite side of the vehicle electrical components have been moved to give more space for a larger fuel tank 327.

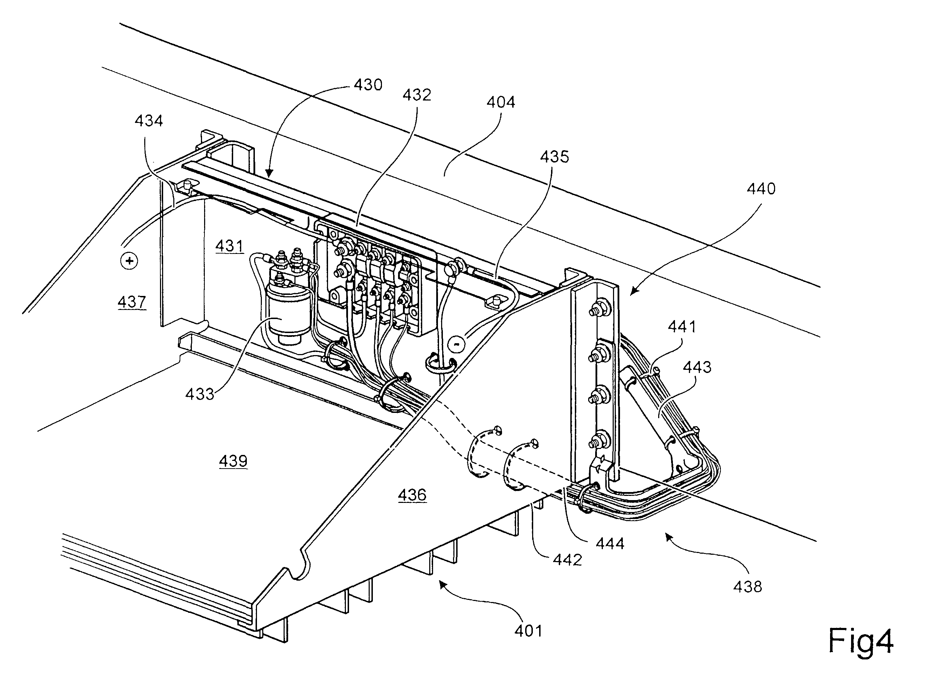

Figure 4 shows a preferred placing of a module 430 in the battery box 401. The module 430 includes a chassis 431 onto which a number of electrical components have been pre-assembled. In its simplest form the module only contains a fuse box 432. This fuse box is separate from the standard vehicle fuses and will be described in detail below. However, the figure shows a module for vehicles intended for cold climates, where preheating of the engine is required. For this purpose a preheating relay 433 has been mounted in the module 430. All components have been pre-assembled onto the chassis 431, which will be lowered into the battery box 401 between the battery pack (not shown) and the vehicle frame 404 to be attached to the sides 436, 437 of the box 401 by screws during assembly of the vehicle. It is possible to pre-assemble the components of the module to the extent that it is only necessary to connect the cables 434, 435 for the positive and negative terminals of the battery pack and withdraw the cable 438 required for consumers and other applications from the box 401. Depending on the vehicle model and standard of equipment, certain subsequent assembly may be required, such as connecting up individual fuses in the fuse box 432.

Repairs and maintenance of the module 430 can be performed either by disconnecting and lifting the chassis 431 out of the box, or by lifting out the battery pack placed on the lower surface 439 of the box. The battery box 401 is attached to the frame 404 by means of screws 440. The pre-assembled cabling 438 has the correct length for the particular vehicle model and is fastened to attachments 443, 444 provided on the frame 404 and the chassis 430 of the module by means of straps 441, 442.

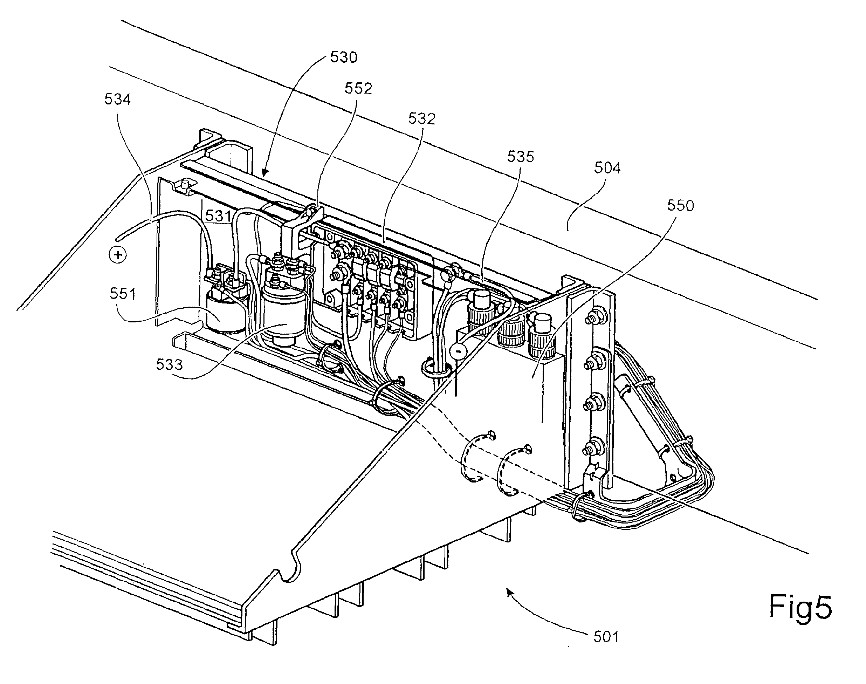

Figure 5 shows an alternative embodiment of the battery box 501 and the module 530. As in the above embodiment, this module is provided with a fuse box 532 and a preheating relay 533. A vehicle to be used for dangerous cargo must have an ADR-classification, which among other things means that it must be provided with equipment for interrupting the power from the batteries in case of fire or accidents. Hence the module 530 is provided with an electronic control unit 550 and a power relay 551. The control unit 550 is a so called ADR-unit which has electronic circuits for transmitting a signal to the power relay 551 for interrupting the current from the battery pack, in response to input signals from, for example, a current sensor 552 or a command from the driver. For this purpose the power relay 551 is connected directly to the cable 534 attached to the positive terminal of the battery pack. The function of the ADR-system is commonly known and will not be described in further detail. Mounting and connection of the module 530 is achieved in the same way as described in connection with Figure 4 above.

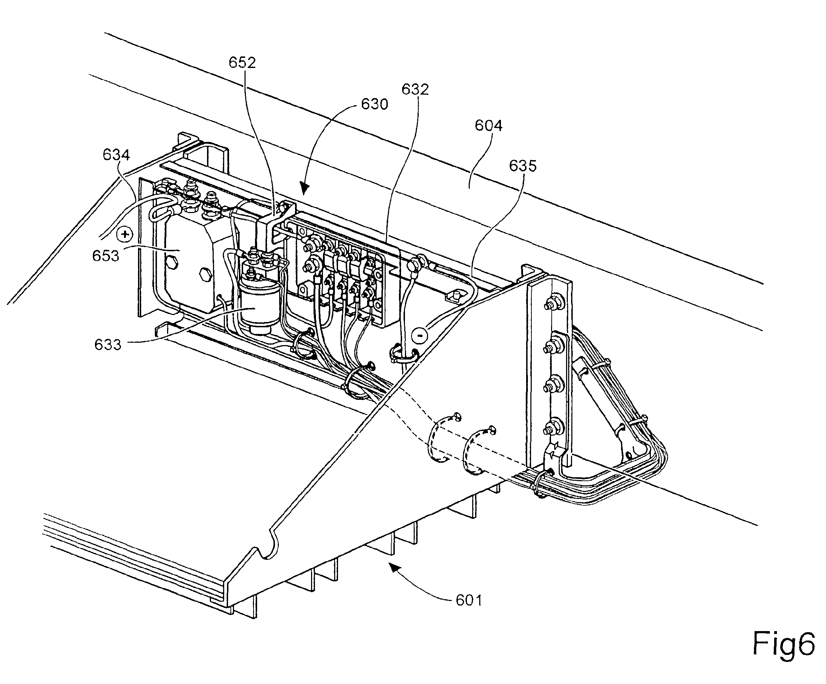

Figure 6 shows an embodiment that essentially corresponds to the one described in connection with Figure 5. This embodiment shows a module 630 with a battery master switch 653. This switch 653 is electrically operated as cuts off the power from the battery pack automatically in response to signals from the current sensor 652, the vehicle electronics, or by actuation of a manual switch located outside the battery box 601. Such switches are preferably placed adjacent the box 601, in the drivers cab and/or on the outside of the cab.

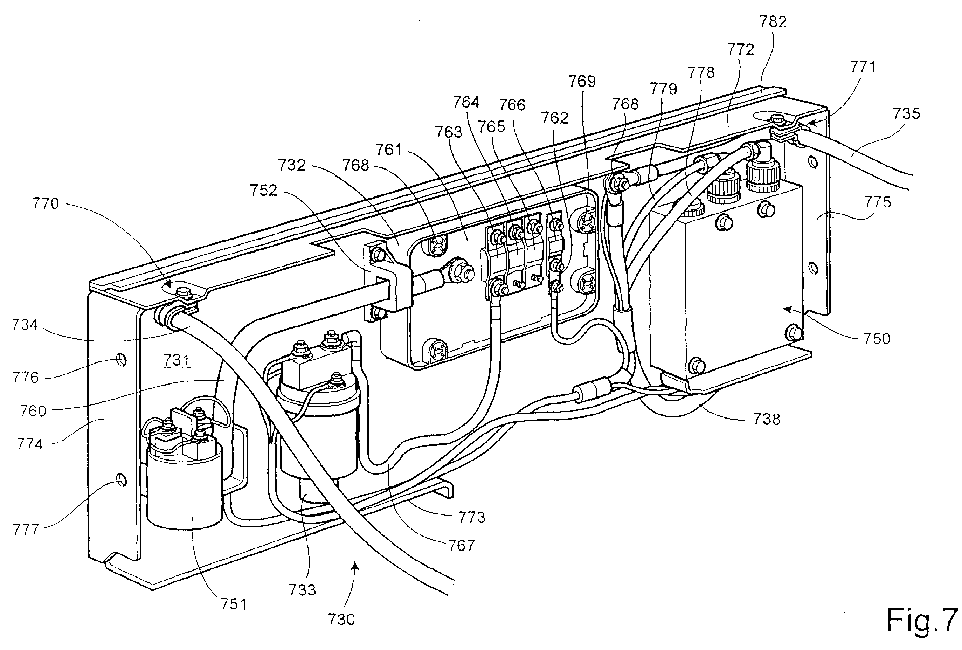

Figure 7 shows a module 730 with a chassis 731 provided with electrical components pre-assembled according to the embodiment of Figure 5. Hence these components include a fuse box 732, a preheating relay 733, an ADR-unit 750, a power relay 751 and a current sensor 752, preferably an inductive sensor.

A first cable 734 connects the positive terminal of the battery pack with the power relay 751, which in turn is connected to a first copper rail 761 in the fuse box via a second cable 760. A number of fuses 763, 764, 765, 766 are connected between this first and a second copper rail, 761 and 762 respectively. A first fuse 763 is used for the preheating relay 733, which is connected via a third cable 767. In this embodiment the second fuse 764 is used for feeding current to the drivers cab (fridge, TV, etc.), although the outgoing cable is not shown. The third fuse 765, which is intended for power supply for additional equipment (bogie lifter, crane, etc.), is not in use. However, the fuse box is prepared for subsequent mounting of any such equipment. Suitable sizes for the above fuses are 100-200 A, depending on the load. A fourth fuse 766 is part of a circuit giving back-up lighting for the headlights, position lights and cab, should the normal circuit be disabled. This is preferably a 40 A fuse. The fuse box is covered by a lid (not shown) which is attached by a number of quick couplings 768, 769. The negative terminal of the battery pack is grounded to the chassis 731 of the module via a fourth cable 735 and a screw 768. The chassis 731 is also grounded to the frame via a further cable connection. The two cables 734, 735 to be connected to the positive and negative terminals of the battery pack are placed in the correct position for final assembly by means of a pair of clamp connections 770, 771 attached to a horizontal, upper surface 772 of the chassis 731. Said upper surface 772 is also provided with a profiled edge 782, which has a holding function for the battery box cover. Outgoing cables are gathered in a bundle and pulled out through an opening in a horizontal lower surface 773 of the chassis 731, and further through an opening in the bottom or side panel of the battery box. The chassis 731 is also provided with a pair of vertical side panels 774, 775 with recesses 776, 777 for mounting the module 730 between the sides of the battery box.

The ADR-unit 750 is provided with an outgoing, fifth cable 778 connected to the engine electronics for switching off the engine, and a sixth cable 779 connected to a switch placed outside the battery box. This switch can interrupt the current to the starter motor, so that the vehicle cannot be started under certain conditions, e.g. when the vehicle is parked or during ferry transports. In order to facilitate service and/or upgrading of the electronics of the unit, plug-in circuit boards can be used to allow quick replacement. The control electronics hardware and software used is in conformity with the rules set out in the ADR-regulations.

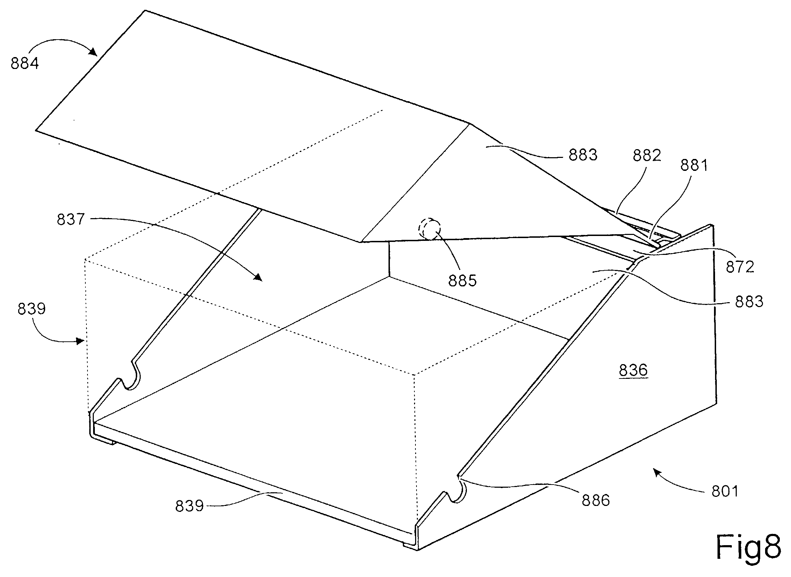

The battery box 801 is provided with a covering lid 880 that covers both the battery pack (not shown) and the module 830, as shown in Figure 8. The lid is indicated in its open and closed positions, by means of dotted lines. The rear end of the lid comprises a flat edge 881, which when the lid is closed will slide in under, and be locked in position by a profiled metal sheet 882 attached to the upper surface 872 of the chassis 830. By designing the side surfaces 836, 837; 883, 884 of both the box and the lid, respectively, with cooperating edges cut at an oblique angle, a two-piece box having a stable construction and high rigidity is obtained. The covering lid 880 is held in place relative to the battery box 801 by means of projections 885 adjacent its oblique edges, which projections co-operate with corresponding recesses 886 in the oblique edges of the battery box. Under transport the cover can be attached by means of one or more known clamping devices.

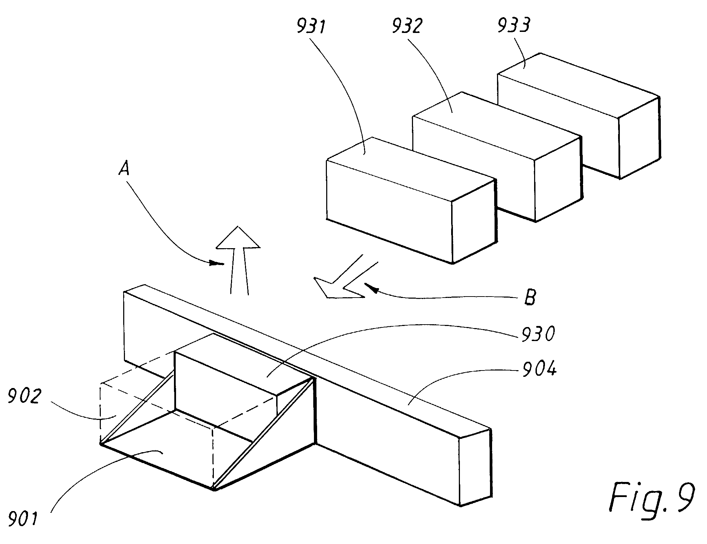

Figure 9 shows a schematic system of separate, pre-assembled modules, all of which are provided with compatible mechanical and electrical interfaces . A battery box 901 is mounted on the frame 904 and contains a module 930. The system further includes a number of additional modules 931, 932, 933, three of which are shown in Figure 9. When a haulier wishes to change the functions of the battery box, or add one or more additional functions to the box, the lid 902 (indicated by dotted lines) is removed and the mechanical attachments and electrical connections of the current module 930 are disconnected. The module 930 is then lifted out of the battery box, as indicated by the arrow A. Subsequently the module 931, 932, 933 having the desired functions is selected and placed in the battery box, as indicated by the arrow B. After connecting the electrical connections and the mechanical attachments of the module, the vehicle is equipped with the new functions and is ready for immediate operation.

The preferred embodiment shows the module positioned between the frame and the battery pack. It is however possible to place the module along one of the sides of the battery box, or to use the module itself as an outer limiting surface of the battery box. Placing the module at the front edge of the battery box is possible, but less suitable for reasons of collision safety. A further alternative is to integrate the module with the lid. However, this can result in problems relating to removal of the lid, partly due to lack of space above the box in certain vehicles, and partly due to difficulties in bending the cables for connecting the battery terminals, which cables may have a cross-section in excess of 70 mm².

Alternative positions for the battery box itself are, apart from the outer sides of the frame, between the parallel beams making up the frame or behind the drivers cab.

## Claims

1. Battery box for a vehicle, which battery box (201, 301, 401, 501, 601, 701, 801) is mounted to a frame (204, 304, 404, 504, 604, 704, 804) of the vehicle and includes a battery pack for supplying the vehicle with current, **characterized in that** the battery box further includes a removably mounted module (230, 330, 430, 530, 630, 730, 830) for electrical components, which module can be replaced or rebuilt.

2. Battery box according to claim 1 **characterized in that** the module (230, 330, 430, 530, 630, 730, 830) is mounted between the battery pack and the frame.

3. Battery box according to claim 1 or claim 2 **characterized in that** the electrical components are connected between the battery pack and a number of electrical consumers in the vehicle.

4. Battery box according to any one of claims 1-3 **characterized in that** the electrical components include a fuse box (432, 532, 632, 732).

5. Battery box according to claim 4 **characterized in that** the electrical components include a power relay (551, 751) and an electronic control unit (550, 750) for said power relay.

6. Battery box according to claim 5 **characterized in that** the power relay (551,751) is connected directly to the positive terminal of the battery pack, in order to cut the power if necessary.

7. Battery box according to claim 5 **characterized in that** the electronic control unit (550, 750) comprises at least one plug-in circuit board.

8. Battery box according to any one of claims 4-6 **characterized in that** the electronic components include a preheating relay (433,533,633,733).

9. Battery box according to any one of claims 4-7 **characterized in that** the electronic components include a current sensor (572, 672, 772).

10. Battery box according to any one of claims 1-8 **characterized in that** the module (230, 330, 430, 530, 630, 730, 830) comprises a chassis (431, 531, 731) onto which the electrical components have been pre-assembled.

11. Battery box according to any one of claims 1-8 **characterized in that** the module (230, 330, 430, 530, 630, 730, 830) comprises a chassis (431, 531, 731) provided with number of spaces prepared for subsequent assembly of additional electrical components.

12. Battery box according to claim 1 **characterized in that** it is provided with a covering lid (880), which when removed uncovers both the battery pack and the module (230, 330, 430, 530, 630, 730, 830).

13. Battery box according to claim 12 **characterized in that** the module (230, 330, 430, 530, 630, 730, 830) is integrated into the lid (880).

14. Battery box according to any one of claims 1-12 **characterized in that** the module is arranged as an outer limiting surface of the battery box.

15. Battery box according to any one of claims 1-12 **characterized in that** all electrical components in the module are completely encapsulated in said module.

16. Method for mounting a module for a battery box according to claim 1, **characterized in** the following steps:
- one or more components are pre-assembled on a chassis (431, 531, 731) in the module (230, 330, 430, 530, 630, 730, 830),
- the module is positioned in and attached to the battery box (201, 301, 401,501,601,701,801),
- cables from the pre-assembled components are connected to the electrical system of the vehicle,
- a battery pack is mounted and connected to the module (230, 330, 430, 530, 630, 730, 830).

17. System for exchangeable modules intended for a battery box according to claim 1, **characterized in that** the system includes a number of exchangeable modules, each provided with a number of different electric components giving each module one or more specific functions, whereby one or more desired electrical functions in the battery box can be achieved by replacing an existing module with a module having said functions.
